# EUROPEAN PATENT APPLICATION

(11) **EP 2 012 171 A2**
(43) Date of publication of application: **07.01.2009**
(21) Application number: 08159507.6
(22) Date of filing: 02.07.2008
(51) Int. Cl.: G02B 27/22, H04N 13/00

(54) **Image displaying device**

(30) Priority: 04.07.2007 JP 2007176496
(71) Applicant: Seiko Epson Corporation, Shinjuku-ku Tokyo 163-0811 (JP)
(72) Inventor: Hamagishi, Goro, Nagano 392-8502 (JP)
(74) Representative: HOFFMANN EITLE

(57) **Abstract**

The image displaying device that displays a first image in a first direction and displays a second image in a second direction different from the first direction, includes a display panel having a plurality of display cells containing first display cells that display the first image and second display cells that display the second image, the first display cells and the second display cells being arranged alternately in a predetermined direction; and an optical unit having a first opening portion provided in correspondence with the first display cells and the second display cells that causes light to be emitted from the first display cells in the first direction through the first opening portion and causes light to be emitted from the second display cells in the second direction through the first opening portion, each of the plurality of display cells having a second opening portion; and a light-shielding region that defines the second opening portion and limits an opening-width along the predetermined direction of the second opening portion to be smaller than the cell intervals, wherein an opening-width in the predetermined direction of the second opening portion of the first cell is different from an opening-width in the predetermined direction of the second opening portion of the second display cell.

## Description

### BACKGROUND

### 1. Technical Field

The present invention relates to an image displaying device that separates a plurality of images and displays the respective images.

### 2. Related Art

Stripe-shaped barriers (image splitters) are arranged at the front surface of a liquid crystal panel and images to be displayed at two observation positions corresponding to the left and right sides of the liquid crystal panel respectively are separated. Thereby, images different to each other are displayed using a single liquid crystal panel. JP-A-8-136909 is an example of related art.

However, a region (called "cross-talk region") in which the two images cannot be separated in proximity to the front surface of the liquid crystal panel and in which the two images overlap each other when displayed, occurs. The cross-talk region is located at the center between optimum viewing positions of two images that are suitable for viewing individually. Thus, when the cross-talk region is moved from being in proximity to the front surface of the liquid crystal panel, the optimum viewing positions of the two images move with the movement of the cross-talk region. As a result, the position of the cross-talk region cannot be set at an arbitrary position. This is common in not only liquid crystal panels that display two images but also in general image displaying devices that separate a plurality of images to be displayed.

### SUMMARY

An advantage of some aspects of the invention is that the invention attempts to solve the existing problem described above and intends for the purpose to provide, it provides image displaying device that separates a plurality of images to be displaying individually, the technology enabling the position at which the cross-talk region occurs to be set more flexibly.

The invention attempts to solve at least a part of the problem described above and can be implemented as described in embodiments below or as in application examples.

### BRIEF DESCRIPTION OF THE DRAWINGS

The invention will be described with reference to the accompanying drawings, wherein like numbers reference like elements.

Fig. 1 is an explanatory view illustrating a schematic configuration of an image displaying device.

Fig. 2 is an explanatory view illustrating the configuration of a barrier, a liquid crystal layer, and a filter layer of a liquid crystal panel.

Fig. 3 is an explanatory view illustrating configurations of the filter layers in a first example and a comparative example.

Fig. 4 is an explanatory view illustrating a first image and a second image that are separated in the lateral direction and displayed by a liquid crystal panel in a comparative example.

Fig. 5 is an explanatory view illustrating the first image and the second image that are separated to be displayed in the lateral direction by a liquid crystal panel in the first example.

Fig. 6 is an explanatory view illustrating a configuration of the filter layer in a second example.

### DESCRIPTION OF EXEMPLARY EMBODIMENTS

### Application example 1

The image displaying device that displays a first image in a first direction and displays a second image in a second direction different from the first direction, includes a display panel having a plurality of display cells containing first display cells that display the first image and second display cells that display the second image, the first display cells and the second display cells being arranged alternately in a predetermined direction; and an optical unit having a first opening portion provided in correspondence with the first display cells and the second display cells that causes light to be emitted from the first display cells in the first direction through the first opening portion and that causes light to be emitted from the second display cells in the second direction through the first opening portion, each of the plurality of display cells having a second opening portion; and a light-shielding region that defines the second opening portions and limits an opening-widths along the predetermined direction of the second opening portions to be smaller than the cell intervals, wherein an opening-width along the predetermined direction of the second opening portions of the first display cells is different from an opening-width along the predetermined direction of the second opening portions of the second display cells.

According to the application example 1, the opening-width of the second opening portions of the first display cells is made to be different from the opening-width of the second-opening portions of the second display cells. Thus, it is be possible to make the widths of the display ranges of the first image and the second image to be different from each other. As a result, it is possible to flexibly set the position of a cross-talk region in which the first image displayed by the first display cells and the second image displayed by the second display cells overlap each other.

### Application example 2

The image displaying device according to application example 1, wherein the light-shielding regions are provided at both end portions in the predetermined direction in each of the plurality of display cells, the plurality of the display cells including a first cell, as the second display cell, arranged along the predetermined direction; a second cell, as the first display cell, adjacent to the first cell; and a third cell, as the second display cell, adjacent to the second cell, wherein an interval in the predetermined direction between the second opening portion of the first cell and the second opening portion of the second cell is set to be longer than that along the determined direction between the second opening portion of the second cell and the second opening portion of the third cell.

According to the application example 2, it is possible to make the width of the cross-talk region that arises from the second image which is displayed by the first cells and the first image which is displayed by the second cells narrower than the width of the cross-talk region that arises from the first image which is displayed by the second cells and the second image which is displayed by the third cells.

### Application example 3

The image displaying device according to application example 2, wherein the interval in the predetermined direction between the second opening portion of the second cell and the second opening portion of the third cell is set approximately equal to that in the predetermined direction of the first opening.

According to the application example 3, the width of the cross-talk region is approximately equal to the size along in predetermined direction of the first opening portion. Thus, it is possible to appropriately reduce the cross-talk region.

### Application example 4

The image displaying device according to application 1, wherein the display cells each have a light-source cell that emits primary light that produces the image light; and a color conversion cell provided at a position nearer to the optical unit than the light-source, that converts the primary light to the image light, wherein the cell intervals are structural intervals of the light source cells that determine a modulation region of the primary light in the light source cells.

According to the application example 4, the structural intervals of the light source cells that determine the modulation region of the light source cells that emits the primary light are maintained at predetermined cell intervals. Thus, it will be easy to manufacture the structure of the modulation region of the light source cells. Application example 5

The image displaying device according to application 1, wherein the image displaying device is a vehicle mounted image displaying device; the first image is presented to a driver in the vehicle; and a width in the predetermined direction of the second opening portion of the first cell is set to be narrower than that in the predetermined direction of the second opening portion of the second cell.

According to the application example 5, the range in which the first image to be presented to a driver is displayed is smaller on the side of the driver. As a result, the region in which only the second image that is different from the image to be presented to a driver can be viewed is larger in front of the image displaying device, and thus it is easy for a passenger in a vehicle to view the second image.

### Application example 6

An image displaying device that displays each of a first image and a second image at two observation positions placed in a separation direction, includes a display panel in which a plurality of first sub-pixels that display the first image and a plurality of second sub-pixels that display the second image are arranged at equal intervals in the separation direction; and a barrier that introduces image light emitted respectively from the plurality of the first sub-pixels and the plurality of the second sub-pixels to the two observation positions that correspond respectively to the first and the second sub-pixels, wherein respective effective widths of the plurality of the first sub-pixels in the separation direction are set to be smaller than those of the plurality of the second sub-pixels.

According to the application example 6, the effective widths of the first sub-pixels are set to be smaller than those of the second sub-pixels. Thus, the display range of the first image is narrower than that of the second image. As a result, the cross-talk region in which the first image and the second image to be displayed overlap each other is reduced.

### Application example 7

An image displaying device that displays N images (N is an integer of 2 or greater) at N observation positions that are arranged in a separation direction, includes a display panel having display cells that are arranged at predetermined cell intervals in the separation direction for displaying the N images; and barriers having barrier opening portions, for every display cell row, for introducing image light with N beams from a display cell row consisting of N display cells arranged adjacent to each other along the separation direction to the N observation positions that correspond to the respective image light, the display cells each including a light-shielding region that limits an opening width in the separation direction of the display cell to be narrower than the cell intervals, wherein an opening width of at least one display cell of the display cell row is different from that of other display cell.

According to the application example 7, the opening width of at least a specific display cell is made to be different from that of the other display cell and thereby the width of the display range of the image to be displayed by the specific display cell can be made to be different from the width of the display range of the image to be displayed by the other display cell. As a result, it is possible to set more flexibly the position of a cross-talk region in which the image that is displayed by the specific display cell and the image that is displayed by the adjacent display cell that is adjacent to the specific display cell overlap each other.

Moreover, the invention can be implemented in various embodiments. For example, the invention can be implemented in embodiments such as computer displays, TV devices, navigation systems, and other display devices using the image displaying devices.

The embodiments of the invention will be described in the order below.
A. First example:
B. Second example:
C. Alternative example:

### A. First example:

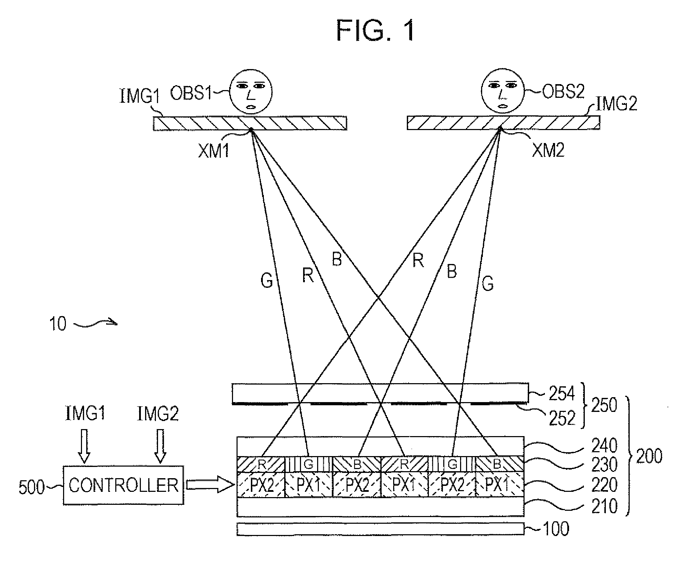

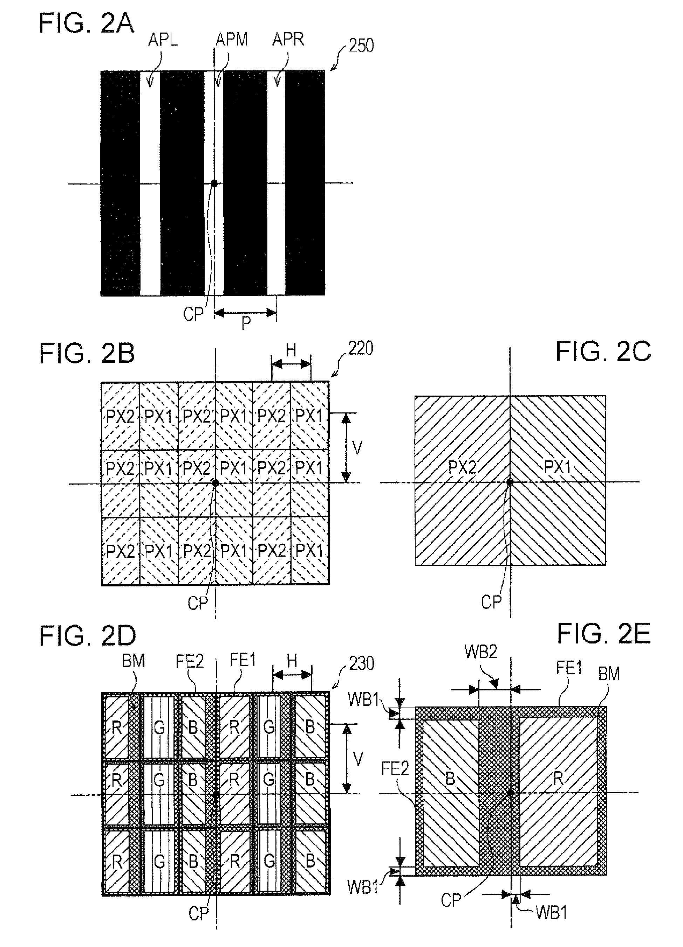

Fig. 1 is an explanatory view illustrating a schematic configuration of the image displaying device 10, as an example of the invention. The image displaying device 10 comprises a backlight 100, a liquid crystal panel 200, and a controller 500 that controls the liquid crystal panel 200. Fig. 2 is a view illustrating the center portion of the liquid crystal panel 200 when viewed from the upper side (the upper portion of the page) of the liquid crystal panel 200. As described below, liquid crystal cells PX1, PX2 are arrayed in a matrix in the lateral direction (the lateral direction of the page) and the longitudinal direction (the vertical direction of the page) in the liquid crystal panel 200. Figs. 1 and 2 are enlarged views illustrating the liquid crystal cells PX1, PX2 in a portion near to the center of the liquid crystal panel 200.

Image data representing a first image IMG1 and image data representing a second image IMG2 are input to a controller 500. The controller 500 produces from the input two sets of image data a driving signal for driving the liquid crystal panel 200 and supplies the signal to the liquid crystal panel 200. In the structure in which the image displaying device 10 is mounted in a vehicle, as the first images IMG1, TV receiving images are supposed, and as the second images IMG2, map images of a navigation system that are presented to a driver are supposed.

The liquid crystal panel 200 includes a first glass substrate 210, a liquid crystal layer 220, a filter layer 230, a second glass substrate 240, and a barrier 250, and they are laminated in this order. The liquid crystal panel 200 has two polarizing plates. However, illustration of the plates is omitted for convenience.

Pixel electrodes that are not shown in Fig. 1 and 2 are arrayed in a matrix in the lateral direction (the lateral direction of the page) and the longitudinal direction (the vertical direction of the page) on the liquid crystal layer 220 side of the first glass substrate 210. The orientation of liquid crystal molecules is made to vary, in the regions (liquid crystal cells) PX1, PX2 of the liquid crystal layer 220 corresponding to the pixel electrodes of the liquid crystal layer 220, in response to the drive signal supplied to the pixel electrodes by the controller 500 and the amount of rotation of the polarized surfaces of the liquid crystal cells PX1, PX2 vary. The drive signals produced on the basis of the first image IMG1 are supplied to the liquid crystal cells PX1 by the controller 500, and the drive signals produced on the basis of second image IMG2 are supplied to the liquid crystal cells PX2. As will be understood by this description, it can be said that the space between the liquid crystal cells PX1 and PX2 is a space between pixel electrodes that determines the modulation ranges of the intensity of the polarized surfaces by the liquid crystal cells PX1, PX2.

The filter layer 230 formed on the second glass substrate 240 has a color filter of three colors of RGB. Filters of any color of the three colors of RGB correspond to individual liquid crystal cells PX1, PX2 of the liquid crystal layer 220 and are arrayed in the filter layer 230. The filters corresponding to individual liquid crystal cells PX1, PX2 may be hereafter called "filter elements".

A light-shielding layer 252 that does not transmit light is provided on the glass substrate 254 and together they form the barrier 250. In the barrier 250, a region in which the light-shielding layer 252 is provided may be called a "light-shielding portion", and a region in which the light-shielding layer 252 is not provided may be called an "opening portion".

White light incident from the backlight 100 to the liquid crystal panel 200 passes through two polarizing plates that are not illustrated in Figs. 1 and 2 and the liquid crystal layer 220, and thereby the intensity of the white light is modulated in response to the amount of rotation of the polarized light surfaces in the liquid crystal cells PX1, PX2. Further, the white light passes through individual filter elements in the filter layer 230. Thus, the white light is converted to image light with three colors of RGB. The image light with the three colors that passes through the barrier 250 is emitted to the outside of the liquid crystal panel 200. With the liquid crystal cells and filter elements corresponded to the liquid crystal cells above, the image light that is used to display images is emitted. Thus, the liquid crystal cells and the filter elements corresponding to the liquid crystal elements are combined and the combinations may be called "display cells". Moreover, it may be said that each of the liquid crystal cell emits the white light (primary light) to produce the image light. Thus, the liquid crystal cell may be called a "light source cell". Further, the filter element has the function of converting the white light to the image light with three colors of RGB. Thus, the filter element may be called a "color conversion cell". It will be evident from considerations of the foregoing that a laminated body including the crystal layer 220 and the filter layer 230 has the display cells that emit the image light in the liquid crystal panel 200. Thus, the laminated body including the liquid crystal layer 220 and the filter layer 230 may be called a "display panel".

In this manner, in the image-displaying device 10 in the first example, introducing the image light emitted from the liquid crystal panel 200 to the observation positions by using the opening portions of the barrier 250 separates the first image IMG1 and the second image IMG2 in the lateral direction (separation direction) in order to display the respective images. Then, an observer OBS1 at a first optimum viewing position XM1 can observe the first image IMG1 and an observer OBS2 at a second optimum viewing position XM2 can observe the second image IMG2. Here, the optimum viewing position means the optimum position at which a corresponding image can be viewed as intended.

Fig. 2 is an explanatory view illustrating a configuration of the barrier 250, the liquid crystal layer 220, and the filter layer 230 in the liquid crystal panel 200 (Fig. 1). Figs. 2A to 2E are views illustrating the center portion of the liquid crystal panel 200 that is viewed from the side of the backlight 100 (it may be called hereafter "the side of the light saurce"). In Figs. 2A to 2E, the alternate long and short dash line represents the center line in the longitudinal direction (the longitudinal center line) of the liquid crystal panel 200, and the alternate long and two short dashes line represents the center line in the lateral direction (the lateral center line) of the liquid crystal panel 200. The crossing point CP of the longitudinal centerline and the lateral centerline is the center position of the liquid crystal panel 200.

Fig. 2A is a view schematically illustrating a configuration of the barrier 250. Stripe-shape opening portions APL, APM, and APR that extend in the longitudinal direction are provided in the barrier 250 in the first example. The opening portion APM at the center position CP is arranged so that the center position CP of the liquid crystal panel matches the center of the opening portion APM. The interval of the opening portions adjacent to each other are set at the lateral pitch P. Moreover, as illustrated in Fig. 2A, such a barrier having the stripe-shape opening portions APL, APM, and APR is generally called "a stripe barrier".

Fig. 2B is a view illustrating the arrangement of the liquid crystal cells PX1 and PX2 that are formed in the crystal layer 220. Fig. 2C is an enlarged view of two liquid crystal cells located in proximity to the center position CP. As illustrated in Figs. 2B and 2C, the liquid crystal cells are arranged so that the boundaries of the liquid crystal cells adjacent to each other in the lateral direction are aligned with the longitudinal centerline in proximity to the longitudinal centerline. The centers of the liquid crystal cells on the lateral centerline are arranged so as to be located on the lateral centerline. For the liquid crystal cells, intervals in the lateral direction are set at a lateral pitch H and intervals in the longitudinal direction are set at a longitudinal pitch V. The lateral pitch H of the liquid crystal cells PX1, PX2 and the lateral pitch P of the opening portions are determined properly by the distance between the barrier 250 and the filter layer 230, the optimum viewing positions XM1, XM2 of the two images IMG1, IMG2 (shown in Fig. 1), etc. The longitudinal pitch V of the liquid crystal cells PX1, PX2 is determined properly with consideration of the resolution of the images IMG1, IMG2 that are observed at the optimum positions XM1, XM2, and other factors.

As illustrated in Fig. 1, light that has passed through two liquid crystal cells adjacent to the longitudinal centerline passes through the opening portion APM on the longitudinal centerline. Then, the light is emitted from the liquid crystal panel 200. Light that has passed through the two liquid crystal cells located on the right side of the page of the liquid crystal cell in the center portion (hereafter called "the right side" simply) passes through the opening portion APR on the right side and through the opening portion APM on the longitudinal centerline. In this case, more light passes through the opening portion APR on the right side. Then, the light is emitted from the liquid crystal panel 200. Similarly, light that has passed through the two liquid crystal cells located on the left side of the page (hereafter simply called "the left side") passes through the opening portion APL on the left side and through the opening portion APM on the longitudinal centerline. In this case, more light passes through the opening portion APL on the left side. Then, the light is emitted from the liquid crystal panel 200. The liquid crystal cells that are formed in the liquid crystal layer 220 in this manner are arrayed in the lateral direction. Thus, the liquid crystal cells can be divided into groups of liquid crystal cells (liquid crystal cell rows) corresponding to the opening portions APL, APM, and APR respectively, as illustrated by the thick line in Fig. 2B.

Fig. 2D is a view schematically illustrating a configuration of the barrier 230. In Fig. 2D, the thick line illustrates filter elements FE1, FE2 corresponding to individual liquid crystal cells PX1, PX2 shown in Fig. 2C. Fig. 2E is an enlarged view schematically illustrating the filter elements FE2, FE1 in proximity to the center position CP. As illustrated in Figs. 2D and 2E, the filter elements are arranged so that the boundaries of the filter elements adjacent to each other in the lateral direction are aligned with the longitudinal centerline. Moreover, the centers of the filter elements on the lateral centerline are arranged so as to be positioned on the lateral centerline. The intervals in the lateral direction of the filter elements and the intervals in the longitudinal direction thereof are set at the same intervals as those (the lateral pitch is H, and the longitudinal pitch is V) of the liquid crystal cells shown in Fig. 2C. Thus, the filter elements and the liquid crystal cells are overlapped with each other. Accordingly, the display cells consisting of the filter elements and the liquid crystal cells form the group of the display cells (display cell row) corresponding to the liquid crystal array.

A light-shielding region BM that is called "a black matrix" is formed around the circumference of individual filter elements FE1, FE2. The black matrix BM is provided so as to block light (leaked light) from adjacent liquid crystal cells that are adjacent to the liquid crystal cells corresponded to the filter elements. Blocking the leaked light from the adjacent liquid crystal cells improves the contrast of images displayed. Regions of the filter elements in which the black matrix BM is not formed are filters through which any of the three colors of RGB is transmitted. Forming the black matrix BM in this manner makes the widths of the filter elements narrower than the lateral pitch H.

As illustrated in Figs. 2C and 2E, the width of the black matrix BM of the filter element FE1 corresponding to the liquid crystal cell PX1 and the width of the black matrix BM at the left side of the filter element FE2 corresponding to the liquid crystal cell PX2 are each set to be the first width WB1. On the other hand, the width of the black matrix BM at the right side of the filter element FE2 is set to be the second width WB2, which is greater than the first width WB1. The widths in the vertical direction of the black matrix BM are set to be the first width WB1 even for both cases of the two filter elements FE1, FE2. Enlarging the width of the black matrix BM makes possible to suppress the lowering of the contrast that is caused by the leaked light from the adjacent liquid crystal cells. However, enlarging the width of the black matrix BM decreases the amount of light that passes through the filter element. The first width WB1 of the black matrix BM is determined properly with consideration of such characteristics. On the other hand, the second width WB2 of the black matrix BM is set to be greater than the first width WB1. The detailed setting method of the second width WB2 will be described below.

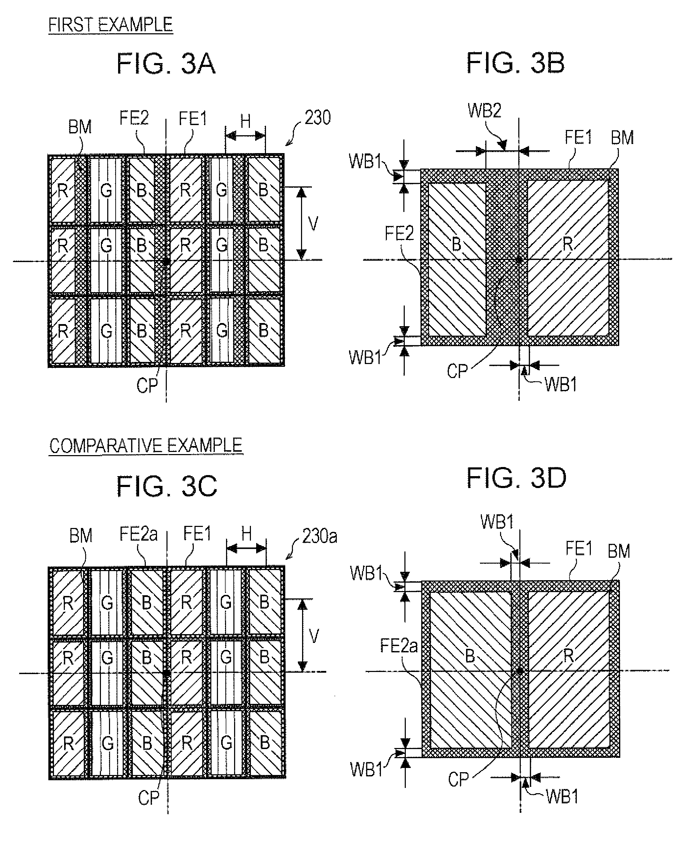

Fig. 3 is an explanatory view illustrating configurations of the filter layers according to the first example and a comparative example. Figs. 3A and 3B are the same as Figs. 2D and 2E and illustrate the configuration of the filter layer 230 according to the first example. Figs. 3C and 3D views illustrating the configuration of the existing filter layer as the comparative example. Figs. 3A and 3D are views illustrating the center portion of the liquid crystal panel viewed from the side of the light source. In Figs. 3A to 3E, the alternate long and short dash line represents the centerline in the longitudinal direction (the longitudinal centerline) of the liquid crystal panel, and the alternate long and two short dashes line represents the centerline in the lateral direction (the lateral centerline) of the liquid crystal panel. The crossing point CP of the longitudinal centerline and the lateral centerline is the center position of the liquid crystal panel. The configuration of the comparative example is, except the configuration of the filter layer, the same as that of the first example.

As illustrated in Fig. 3C, the arrangement of the filter elements FE1, FE2a in the comparative example is the same as that of filter elements FE1, FE2 in the first example. On the other hand, as illustrated in Fig. 3D, the filter element FE2a of the comparative example is different from the filter element FE2 of the first example shown in Fig. 3B, in the point that all of the widths of the black matrix BM are set to be the same width WB1.

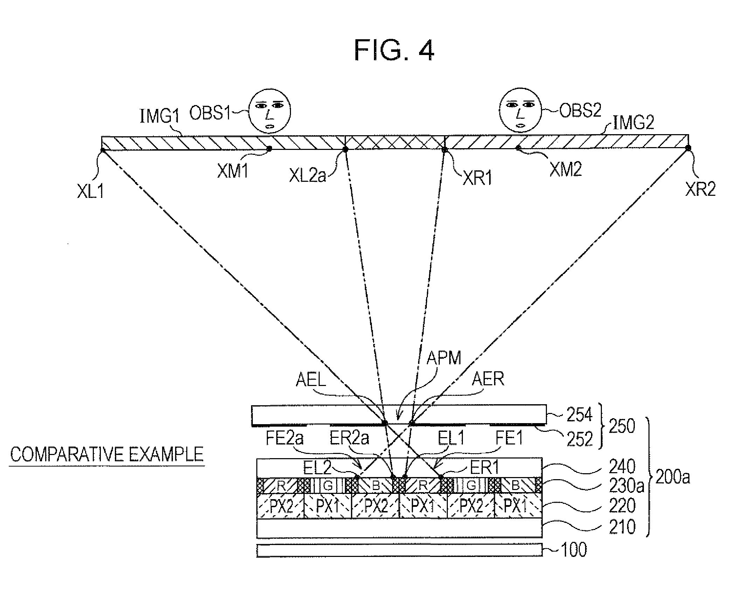

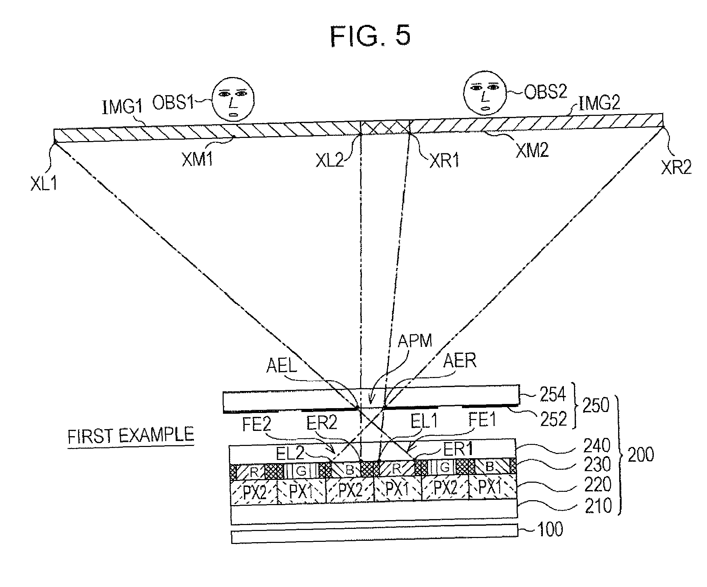

Fig. 4 is an explanatory view illustrating the first image IMG1 and the second image IMG2 that are separated in the lateral direction to be displayed by the liquid crystal panel 200a of the comparative example. Fig. 5 is an explanatory view illustrating an aspect of the invention in which the first image IMG1 and the second image IMG2 are separated in the lateral direction to be displayed by the liquid crystal panel 200 of the first example. Figs. 4 and 5 are views illustrating optical paths from the two liquid crystal cells PX1, PX2 in the center portion that pass through the opening portion APM in the center portion, for convenience of illustration. The alternate long and short dash line in Figs. 4 and 5 represents the optical path of the first image light for displaying the first image IMG1 that passes from the liquid crystal cell PX1 through the filter element FE1 to be emitted. The alternate long and two short dashes line represents the optical path of the second image light for displaying the second image IMG2, that passes from the liquid crystal cell PX2 through the filter elements FE2, FE2a to be emitted.

As illustrated in Fig. 4, light of the first image light that is emitted from the black matrix end portion EL1 of the filter element FE1 passes through the right end AER of the opening portion APM and reaches a position XR1 on a viewing screen PO that includes the optimum viewing positions XM1, XM2. Light that is emitted from the black matrix end portion ER1 passes through the left end AEL of the opening portion APM reaches a position XL on the viewing screen PO. As a result, the first image IMG1 that is represented by hatching in the direction from the upper left to the lower right is displayed in the region between the positions XL1 and XR1 on the viewing screen PO (the observation position of the first image IMG1).

Similarly, light of the second image light that is emitted from the black matrix end portion EL2 of the filter element FE2a passes through the right end AER of the opening portion APM reaches a position XR2 on the viewing screen PO. Light that is emitted from the black matrix end portion ER2a passes through the left end AEL of the opening portion APM reaches a position XL2a on the viewing screen PO. As a result, the second image IMG2 that is represented by hatching in the direction from the upper right to the lower left is displayed in the region between the positions XL2a and XR2 on the viewing screen PO (the observation position of the second image IMG2).

As illustrated in Fig. 4, the right-end XR1 of the display region of the first display image IMG1 is positioned at the side nearer to the right side than the left-end XL2a of the display region of the second image IMG2. Thus, the first image IMG1 and the second image IMG2 are overlapped with each other and displayed in the region between the positions XL2a and XR1 on the viewing screen PO. The region in which two images are overlapped and displayed in this manner is called the cross-talk region.

In the liquid crystal panel 200 in the first example, as illustrated in Fig. 2, the width WB2 of the black matrix at the right side of the filter element FE2 is greater than the width WB1 of the black matrix at the left side of the filter element FE2 and at both sides of the filter element FE1. Therefore, as illustrated in Fig. 5, the black matrix end portion ER2 of the filter element FE2 is positioned at a position nearer to the left side than the black matrix end portion ER2 of the filter element FE2 in the comparative example shown in Fig. 4. As a result, the image light that is emitted from the black matrix end portion ER2 and passes through the left-end AEL of the opening portion APM reaches a position nearer to the right side the position XL2 on the viewing screen PO.

In the first example, the light emitted from the filter element FE2 reaches a region between the positions XL2 and XR2 on the viewing screen PO that is narrower than that in the comparative example in this manner. Accordingly, the cross-talk region in the front direction of the liquid crystal panel 200 is reduced. Even when the cross-talk region is reduced, both the optimum position XM1 of the first image IMG1 and the optimum position XM2 of the second image IMG2 are maintained at the same positions as in the comparative example. The width BW2 of the black matrix at the right side of the filter element FE2 is preferably set so that the sum (WB2 + WB1) with the width BW1 of the black matrix at the left side of the filter element FE1 and the width WB2, namely the width (continuous width) of the black matrix that continues over the filter elements FE1 and FE2 is approximately equal to the widths of the opening portions APL, APM, and APR of the barrier 250. Setting in this way makes the width of the cross-talk region approximately equal to the widths of the opening portions APL, APM, and APR of the barrier 250. Thus, the cross-talk at a position in front of the liquid crystal panel 200 can be suppressed. Even when the continuous width of the black matrix BM is different from the widths of the openings APL, APM, and APR of the barrier 250 in the range of ±10% to the widths, the cross-talk at a position in front of the liquid crystal panel 200 can be suppressed. Even when the continuous width of the black matrix BM is different from the widths of the openings APL, APM, and APR of the barrier 250 in the range of ±10% to the widths, it can be considered that the widths are approximately equal.

As described above, according to the first example, for the filter element FE2 at the left side of the two filter elements in the display cell row corresponding to the opening portions, the width of the black matrix at the side (the right side) that is adjacent to the filter element FE1 is greater than that at the side (the left side) that is not adjacent to the filter element FE1. This enables reduction of the cross-talk region in front of the liquid crystal 200 without moving the optimum positions XM1, XM2 of the two images IMG1, IMG2.

When the image displaying device 10 is mounted in a vehicle, increasing the width of the black matrix at the right side of the filter element FE2 expands the visible region of only the first image IMG1 towards the front side of the image displaying device 10. Accordingly, it is easier for a vehicle passenger to view the first image IMG1, such as a TV broadcast image, etc.

### B. Second example:

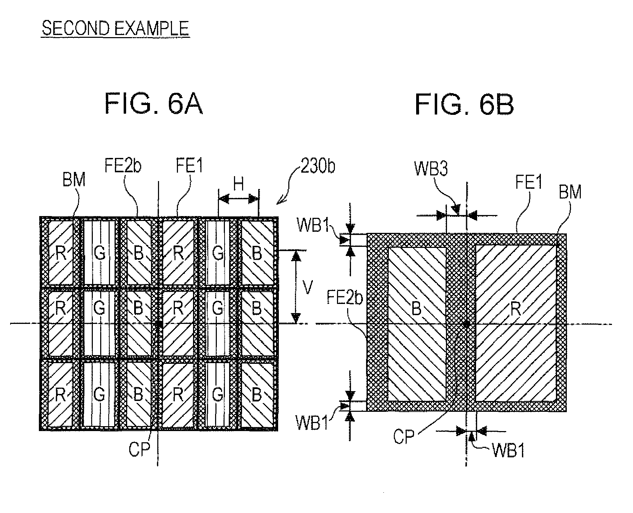

Fig. 6 is an explanatory view illustrating a configuration of a filter layer 230b in the second example. Figs. 6A and 6B are views illustrating the center portion of the liquid crystal panel when viewed from the side of the light side. In Figs. 6A and 6B, the alternate long and short dash line represents the centerline in the longitudinal direction (the longitudinal centerline) of the liquid crystal panel, and the alternate long and two short dashes line represents the centerline in the lateral direction (the lateral centerline) of the liquid crystal panel. The crossing point CP with the longitudinal centerline and the lateral centerline is the center position of the liquid crystal panel. The second example is different from the first example in the point that the filter layer 230 (shown in Fig. 2) is replaced with the filter layer 230b. Other features except the above are the same as that of the first examples.

As illustrated in Fig. 6B, the filter elements FE1, FE2b are arranged similarly to the arrangement of the filter elements FE1, FE2 in the first example. Accordingly, an interval in the lateral direction is set to be the lateral pitch H and an interval in the longitudinal direction is set to be the longitudinal pitch V. Because of this, filter elements in the second example are overlapped with the liquid crystal cells similarly to the first example. On the other hand, as illustrated in Fig. 6B, the two widths of the black matrix BM in the lateral direction in the filter element FE2b in the second example are different from that of the filter element in the first example, in the point that both the two widths of the black matrix in the lateral direction in the filter element FE2b are set at the width WB3 between the width WB1 of the black matrix of the filter element FE1 and the width WB2 of the black matrix at the right side of the filter element FE1 (shown in Fig. 2E) in the first example.

As described above, setting the widths of the black matrix BM in both the left and the right direction at the same width WB3 in the filter element FE2b in the second example places a filter (hereafter called "the opening portion of the filter element") through which any colored light of the three colors of RGB is transmitted at the center of the filter element FE2b. Both the widths WB3 of the left and right black matrix BM in the filter element FE2b are set greater than the width WB1 of the black matrix of the filter element FE1. Thus, the opening width of the filter element FE2b of the group of the filter elements is made narrower than the opening width of the other filter element FE1. ln this way, decreasing the opening width of the filter element FE2b reduces evenly the display region of the second image IMG2 illustrated in Fig. 4 in the direction of the optimum viewing position. Accordingly, it is possible to reduce both the cross-talk regions that occur in front of the liquid crystal panel and in the right direction of the liquid crystal panel.

In this way, the second example is more preferable than the first example in the point that both the cross-talk regions that occur in front of the liquid crystal panel and in the right direction of the liquid crystal panel can be reduced. In contrast, the first example is more preferable than the second example in the point that the cross-talk region in front of the liquid crystal panel can be further reduced.

Moreover, in the second example, the opening portion of the filter element FE2b is placed at the center of the filter element FE2b. However, it is not necessary that the opening portion of the filter element FE2b is placed at the center thereof. The opening portion of the filter element FE2b is properly placed in response to the position of the cross-talk region to be reduced.

The configuration of the image displaying device 10 in each examples above can be described below. In the liquid crystal panel 200 of the image displaying device 10, the first sub-pixel and the second sub-pixel (display cell) are arrayed at even intervals of the lateral pitch H in the lateral direction. The effective width of the left-side sub-pixel of the first and the second pixel, namely the lateral width of the opening portion of the left-side filter element is narrower than that of the right-side sub pixel. Then, image light that is emitted from the first and the second sub-pixel are guided to two observation positions that correspond to the sub-pixels respectively.

### C. Alternative example

The invention is not limited to the examples and embodiments descried above, which can be performed by different embodiments without departing from the invention. For example, the invention may be alternated to the following.

### C1. Alternative example 1

In each example described above, as illustrated in Fig. 2, the stripe barrier in which the stripe-shaped opening portions are arrayed at predetermined intervals in the lateral direction is used as the barrier 250. However, the barrier may be replaced with different-shaped barriers. For example, it is possible to use a step barrier in which rectangular opening portions are arrayed in an oblique direction as the barrier. In this case, the first display cell (namely, the liquid crystal cell PX1 and the filter element FE1) for displaying the first image IMC1 and the second display cell (namely, the liquid crystal cell PX2 and the filter element FE2) for displaying the second image IMG2 are corresponded to the array of the opening portions to be arrayed alternatively in the longitudinal direction of the liquid crystal panel 200. Also, in this case, the display cell row corresponding to the opening portions is a group of the display cells in which the first display cell is placed on the right side and the second display cell is placed on the left side.

### C2. Alternative example 2

In the examples described above, as illustrated in Fig. 2, filters with the same color are arrayed in the order of RGB from the left to the right in the longitudinal direction in the filter layer 230. However, it is possible to make the filter layer to different configurations. It is possible to alternate the array of the filters properly in response to the shapes of the barrier and the arrays of the liquid crystal cells PX1, PX2.

### C3. Alternative example 3

In the examples described above, the invention is applied to the image displaying device 10 using the liquid crystal panel 200. However, it is possible to apply the invention to other types of image displaying devices. The invention generally intends to provide an image displaying device that displays two images at two observation positions respectively. The image displaying device includes light source cells that produce primary light for producing image light and color conversion cells that convert light from the light source to the image light and then can be applied to any image displaying device. The invention can be applied to, for example, the image displaying device (EL displaying device) using electro-luminescence (EL). For applications of the EL displaying devices, the invention can be applied to an EL displaying device that converts light emitted from a white light emitter to colored light by filters and also, to an EL displaying device that converts light emitted from an emitter having a blue color or a wavelength shorter than a blue color to colored light by an emitting phosphor. In the EL displaying devices, the light emitters correspond to the light source cells that emit primary light, and the filters or the emitting phosphors correspond to the color conversion cells. A modulation region is determined by the shape of the light emitter, an electrode wire connected to the light emitter, a thin-film transistor (TFT) that drives the light emitter, etc.

### C4. Alternative example 4

In the examples described above, the display cells have the two types cells, the light source cells for emitting the primary light and the color conversion cells for converting the primary light to the image light to be configured. However, configurations different from the display cells above can be used. Generally, when colored light that becomes the image light can be generated directly, it is possible to use any type cells as display cells. For applications of such display cells, plasma emitting elements and light-emitting diodes (LED), etc. can be used.

### C5. Alternative example 5

In each of the examples described above, the image displaying device 10 is configured so as to display two images IMG1, IMG2 respectively at two observation positions of the left and the right side of the liquid crystal panel 200. However, the image displaying device can be configured so as to display N images (N is an integer of 2 or more) at N observation positions that are arranged in the lateral direction thereof. In this case, the display cell row corresponding to the opening portions of the barrier has N display cells. In at least one display cell of N display cells, the width of the black matrix at the side adjacent to other cell in the display cell row may be greater than that of the black matrix of remaining display cells. Even in this case, the cross-talk region can be reduced without changing optimum viewing positions of N images.

## Claims

1. An image displaying device that displays a first image in a first direction and displays a second image in a second direction different from the first direction, comprising:
a display panel having a plurality of display cells containing first display cells that display the first image and second display cells that display the second image, the first display cells and the second display cells being arranged alternately in a predetermined direction; and
an optical unit having a first opening portion provided in correspondence with the first display cells and the second display cells that causes light from to be emitted the first display cells in the first direction through the first opening portion and causes light to be emitted from the second display cells in the second direction through the first opening portion,
each of the plurality of display cells having
a second opening portion; and
a light-shielding region that defines the second opening portion and limits an opening-width along the predetermined direction of the second opening portion to be smaller than the cell intervals,
wherein an opening-width in the predetermined direction of the second opening portion of the first cell is different from an opening-width in the predetermined direction of the second opening portion of the second display cell.

2. The image displaying device according to claim 1,
wherein the light-shielding regions are provided at both end portions in the predetermined direction in each of the plurality of display cells,
the plurality of the display cells includes a first cell, as the second display cell, arranged along the determined direction; a second cell, as the first display cell, adjacent to the first cell; and a third cell, as the second display cell, adjacent to the second cell,
wherein an interval in the predetermined direction between the second opening portion of the first cell and the second opening portion of the second sell is set to be longer than that in the determined direction between the second opening portion of the second cell and the second opening portion of the third cell.

3. The image displaying device according to claim 2,
wherein the interval along the predetermined direction between the second opening portion of the second cell and the second opening portion of the third cell is set to be approximately equal to that in the predetermined direction of the first opening.

4. The image displaying device according to any one of preceding claims 1-3, wherein the display cells have light-source cells that emit primary light for producing the image light, and color conversion cells provided at positions nearer to the optical unit than the light-source, that convert the primary light in image light,
wherein the cells intervals are structural intervals of the light source cells that determine a modulation region of the primary light in the light source cells.

5. The image displaying device according to any one of preceding claims 1-4,
wherein the image displaying device is a vehicle mounted image displaying device;
the first image being presented to a driver in the vehicle,
wherein a width in the predetermined direction of the second opening portion of the first cell is set to be narrower than that in the predetermined direction of the second opening portion of the second cell.

6. An image displaying device that displays each of a first image and a second image at two observation positions placed in a separation direction, comprising:
a display panel in which a plurality of first sub-pixels that display the first image and a plurality of second sub-pixels that display the second image are arranged at equal intervals in the separation direction; and
a barrier that introduces image light emitted respectively from the plurality of the first sub-pixels and the plurality of second sub-pixels to the two observation positions that correspond respectively to the first and the second sub-pixels,
wherein respective effective widths of the plurality of the first sub-pixels in the separation direction are set to be smaller than those of the plurality of the second sub-pixels.

7. An image displaying device that displays N images (N is an integer of 2 or greater) at N observation positions that are arranged in the separation direction, comprising:
a display panel having display cells that are arranged at predetermined intervals in the separation direction for displaying the N images; and
barriers having barrier opening portions, for every display cell row, for introducing image light with N beams from a display cell row consisting of N display cells adjacent to each other along the separation direction to the N observation positions that correspond to the respective image light,
the display cell including a light-shielding region that limits an opening width in the separation direction of the display cell to be narrower than the cell intervals,
wherein an opening width of at least one display cell of the display cell row is different from that of the other display cells.
